# EUROPÄISCHE PATENTANMELDUNG

(11) **EP 4 018 799 A1**
(43) Veröffentlichungstag der Anmeldung: **29.06.2022**
(21) Anmeldenummer: 21212409.3
(22) Anmeldetag: 04.12.2021
(51) Int. Cl.: A01C 5/06, A01C 7/06, A01C 7/20

(54) **VERFAHREN ZUM ABLEGEN VON GRANULATPORTIONEN AUF EINE LANDWIRTSCHAFTLICHE NUTZFLÄCHE MITTELS EINER LANDWIRTSCHAFTLICHEN AUSBRINGMASCHINE**

(30) Priorität: 22.12.2020 DE 102020134534
(71) Anmelder: Amazonen-Werke H. Dreyer SE & Co. KG, 49205 Hasbergen (DE)
(72) Erfinder: Johannaber, Stefan Jan, 49536 Lienen (DE); Hilbert, Florenz, 48282 Emsdetten (DE); Teckemeyer, Stephan, 49504 Lotte (DE); Dertenkötter, Fabian, 48346 Ostbevern (DE)
(74) Vertreter: Pelster Behrends Patentanwälte PartG mbB

(57) **Zusammenfassung**

Die Erfindung betrifft ein Verfahren zum Ablegen von Granulatportionen (P), insbesondere Düngerportionen, auf eine landwirtschaftliche Nutzfläche (N) mittels einer landwirtschaftlichen Ausbringmaschine, mit den Schritten: Auseinanderschieben des Erdreichs (E) der landwirtschaftlichen Nutzfläche (N) mittels eines Furchenöffners (20) der landwirtschaftlichen Ausbringmaschine zum Erzeugen einer einen Furchengrund (FG) aufweisenden Granulatablagefurche (AF) und Abgeben einer Granulatportion (P) in die erzeugte Granulatablagefurche (AF) mittels einer Granulatabgabeeinrichtung (18) der landwirtschaftlichen Ausbringmaschine, wobei das Erdreich (E) der landwirtschaftlichen Nutzfläche (N) beim Auseinanderschieben mittels des Furchenöffners (20) von dem Furchenöffner (20) derart verdrängt wird, dass sich die erzeugte Granulatablagefurche (AF) bei Abwesenheit des Furchenöffners (20) verschließt.

## Beschreibung

Die Erfindung betrifft ein Verfahren zum Ablegen von Granulatportionen auf eine landwirtschaftliche Nutzfläche mittels einer landwirtschaftlichen Ausbringmaschine nach dem Oberbegriff des Patentanspruchs 1 und eine Vorrichtung zum Ablegen von Granulatportionen auf eine landwirtschaftliche Nutzfläche nach dem Oberbegriff des Patentanspruchs 14.

In einer Vielzahl von Anwendungsfällen ist es vorteilhaft oder sogar erforderlich, dass Granulat in Form von Portionen auf eine landwirtschaftliche Nutzfläche abgelegt wird. Diese Granulatportionen können beispielsweise Düngerportionen sein, in deren Nahbereich jeweils ein vereinzeltes Saatkorn abgelegt wird. Die Ablage von Düngerportionen bietet in verschiedenen Aussaat- und Düngeszenarien erhebliche Vorteile gegenüber der herkömmlichen Bandapplikation.

Beim Ablegen von Granulatportionen ist es üblich, dass das Erdreich der landwirtschaftlichen Nutzfläche mittels eines Furchenöffners der landwirtschaftlichen Ausbringmaschine auseinandergeschoben wird, sodass eine einen Furchengrund aufweisende Granulatablagefurche erzeugt wird. Die zuvor durch die landwirtschaftliche Ausbringmaschine erzeugte Granulatportion wird anschließend in die erzeugte Granulatablagefurche mittels einer Granulatablageeinrichtung der landwirtschaftlichen Ausbringmaschine abgelegt. Das Erdreich der landwirtschaftlichen Nutzfläche wird beim Auseinanderschieben mittels des Furchenöffners von dem Furchenöffner derart verdrängt, dass sich die erzeugte Granulatablagefurche bei Abwesenheit des Furchenöffners wieder verschließt.

Zur Beibehaltung einer maschinenintern erzeugten Granulatportion während des maschineninternen Transports der Granulatportion in Richtung der Granulatablagefurche haben sich hohe Fördergeschwindigkeiten als vorteilhaft erwiesen. Insofern bestehen Bestrebungen, die Granulatportion auch mit hoher Abgabegeschwindigkeit in Richtung der Granulatablagefurche abzugeben. Anders als bei der Ablage von vereinzelten Saatkörnern beeinflussen sich die Granulatkörner einer Granulatportion während der Flugphase und beim Aufprall auf den Furchengrund gegenseitig, wodurch die Granulatportion an Packungsdichte einbüßen kann. Dieser Effekt wird durch hohe Flug- und Aufprallgeschwindigkeiten der Granulatportion noch verstärkt.

Die in die Granulatportion eingebrachte Energie führt in der Praxis bisher dazu, dass Granulatportionen beim Auftreffen auf den Furchengrund einen erheblichen Teil ihrer Packungsdichte verlieren und teilweise auseinanderfallen. Ferner kommt es aufgrund der hohen kinetischen Energie in der Praxis häufig zum Herausspringen von Granulatkörnern aus der geöffneten Granulatablagefurche. Um jedoch den pflanzenbaulichen Vorteil der Ablage von Granulatportionen ausnutzen zu können, müssen die gebildeten Granulatportionen möglichst präzise abgelegt und gleichzeitig kompakt zusammengehalten werden.

Die der Erfindung zugrundeliegende Aufgabe besteht somit darin, eine kompakte Granulatportion auch bei hohen Abgabegeschwindigkeiten beizubehalten.

Die Aufgabe wird gelöst durch ein Verfahren der eingangs genannten Art, wobei im Rahmen des erfindungsgemäßen Verfahrens die Granulatportion derart in die erzeugte Granulatablagefurche abgegeben wird, dass die Granulatportion vor Erreichen des Furchengrundes zunächst einen Deckungsbereich passiert, in welchem sich die Granulatportion zumindest einseitig in der Deckung des Furchenöffners befindet, welcher das Verschließen der Granulatablagefurche zumindest einseitig verhindert, und anschließend einen Fangbereich passiert, in welchem sich die Granulatablagefurche wegen der Abwesenheit des Furchenöffners bereits verschließt.

Die Granulatablagefurche ist also lediglich temporär für die Aufnahme der Granulatportion geöffnet. Noch während die Granulatportion die Granulatablagefurche passiert, fällt die Furchenbewandung zusammen und es kommt zu einem Furchenkollaps. In dem Fangbereich, in welchem sich die Granulatablagefurche wegen der Abwesenheit des Furchenöffners verschließt, wird die Granulatportion gefangen. Das Erdreich der zusammenfallenden Granulatablagefurche nimmt im Fangbereich die kinetische Energie aus den Körnern der Granulatportion auf, indem Körner direkt nach dem Verlassen des Deckungsbereichs eingeklemmt oder derart vom Erdreich begrenzt werden, dass diese nicht mehr verrollen und aus der Granulatablagefurche springen können. Bei der Granulatablagefurche handelt es sich also um eine selbstfangende Furche, d. h. die Granulatportion wird durch die Granulatablagefurche gebremst und dabei zusammengehalten.

Der Furchenöffner ist vorzugsweise dazu eingerichtet, die Granulatablagefurche nur zeitweise für einen kurzen Moment zu öffnen, bevor der Boden wieder zusammenfällt und es zum Furchenkollaps kommt. Das Granulat, welches portionsweise in die Granulatablagefurche abgegeben wird, kann beispielsweise ein Düngergranulat, Saatgut oder ein Pflanzenschutzmittelgranulat sein. Als Pflanzenschutzmittelgranulat kommt beispielsweise Schneckenkorn in Betracht.

Der Furchenöffner kann das Verschließen der Granulatablagefurche auch beidseitig verhindern, sodass sich die Granulatportion beim Passieren des Deckungsbereichs beidseitig in der Deckung des Furchenöffners befindet und somit im Deckungsbereich beidseitig von dem Furchenöffner vor einem Erdkontakt geschützt wird.

In einer bevorzugten Ausführungsform des erfindungsgemäßen Verfahrens wird die Granulatportion in einer Portioniereinrichtung der landwirtschaftlichen Ausbringmaschine erzeugt. Die Portioniereinrichtung kann ein elektrisch pulsierendes Ventil oder ein fluidbetätigtes, insbesondere druckbetätigtes, Ventil sein. Ferner kann die Portioniereinrichtung ein rotatorisch antreibbares Portionierelement aufweisen, welches während der Drehbewegung Granulat, welches in ein Gehäuse der Portioniereinrichtung einströmt, einsammelt und zu einer Portion zusammenführt. Im Rahmen des Verfahrens wird die in der Portioniereinrichtung erzeugte Granulatportion vorzugsweise in einen mit der Portioniereinrichtung verbundenen Granulatabgabekanal der Granulatabgabeeinrichtung in Richtung der Granulatablagefurche geführt. Der Granulatabgabekanal weist vorzugsweise eine Kanalbewandung auf. Der Förderquerschnitt des Granulatabgabekanals verändert sich vorzugsweise in Richtung der Granulatablagefurche. Die Abgabeöffnung des Granulatabgabekanals verläuft beispielsweise schräg nach oben. Der Granulatabgabekanal ist vorzugsweise so gestaltet, dass die Granulatportion gebündelt in die Granulatablagefurche gelangt. Hierzu kann der Granulatabgabekanal spezifische geometrische Abmessungen, insbesondere eine spezifische Kanalbreite, einen spezifischen Kanalradius und/oder eine spezifische Kanalkrümmung aufweisen. Der Granulatabgabekanal kann einen Förderquerschnitt von etwa 1250 mm² aufweisen. Der Granulatabgabekanal kann rechteckig sein. Alternativ kann der Granulatabgabekanal einseitig oder beidseitig rund oder abgerundet sein. Die Breite des Granulatabgabekanals ist vorzugsweise kleiner als 6 cm. Der Granulatabgabekanal weist vorzugsweise zumindest abschnittsweise eine Krümmung auf, um Körner, welche sich von der Granulatportion entfernt haben, wieder einzusammeln bzw. wieder der übrigen Granulatportion zuzuführen. Der Granulatabgabekanal kann quer zur Fahrtrichtung eine Verengung oder Verjüngung aufweisen, um die Granulatportion quer zur Fahrtrichtung zu bündeln.

Die Portioniereinrichtung ist vorzugsweise an dem Furchenöffner befestigt. Der Furchenöffner kann über einen Befestigungsmechanismus, insbesondere über einen Höhenverstell- und/oder Federmechanismus, an einem Trägerrahmen oder einer Halterung der Ausbringmaschine angeordnet sein, sodass der Furchenöffner und die Portioniereinrichtung gemeinsam relativ zum Trägerrahmen bzw. der Halterung bewegbar sind. Der Furchenöffner und die Portioniereinrichtung sind vorzugsweise Bestandteile eines Ausbringaggregats mit einem Säschar und/oder einer Kornvereinzelungseinrichtung für Saatkörner. Der Furchenöffner kann samt der Portioniereinrichtung relativ zum Säschar und/oder zur Kornvereinzelungseinrichtung bewegbar sein. Der Furchengrund der Granulatablagefurche liegt beispielsweise etwa 10 cm unter der Oberfläche der landwirtschaftlichen Nutzfläche. Die Ablagetiefe der Saatkörner liegt vorzugsweise im Bereich von 3 bis 5 cm. Alternativ kann die Portioniereinrichtung auch direkt am Trägerrahmen bzw. an der Halterung befestigt sein. Die Portioniereinrichtung kann unterhalb oder oberhalb der Kornvereinzelungseinrichtung angeordnet sein. Die Portioniereinrichtung kann in Fahrtrichtung vor oder hinter der Kornvereinzelungseinrichtung angeordnet sein. Die Kornvereinzelungseinrichtung weist vorzugsweise ein rotatorisch antreibbares Vereinzelungselement, beispielsweise eine rotatorisch antreibbare Vereinzelungsscheibe, auf. Das rotatorisch antreibbare Portionierelement der Portioniereinrichtung und das rotatorisch antreibbare Vereinzelungselement der Vereinzelungseinrichtung weisen beispielsweise entgegengesetzte oder übereinstimmende Drehrichtungen während eines Ausbringvorgangs auf. Die Granulatzuführleitung, über welche der Portioniereinrichtung Granulat zugeführt wird, ist vorzugsweise dazu eingerichtet, Lageänderungen der Portioniereinrichtung zu kompensieren. Die Granulatzuführleitung ist vorzugsweise ein, insbesondere flexibler und/oder elastisch verformbarer, Zuführschlauch.

In einer Weiterbildung des erfindungsgemäßen Verfahrens wird die Granulatportion in der Portioniereinrichtung und/oder dem Granulatabgabekanal pneumatisch und/oder mechanisch beschleunigt. Durch die Beschleunigung der Granulatportion in der Portioniereinrichtung und/oder dem Granulatabgabekanal wird eine hohe Abgabegeschwindigkeit erreicht, welche durch eine Beschleunigung ausschließlich durch Schwerkrafteinwirkung nicht erzielt werden kann. Es kommt zu einer Fremdbeschleunigung der Granulatportion, welche nicht auf die Schwerkrafteinwirkung zurückgeht. Die pneumatische Beschleunigung kann durch eine Förderluftströmung und/oder über einen Förderluftstoß erfolgen. Die Förderluftströmung und/oder der Förderluftstoß können über ein elektrisch pulsierendes Ventil oder ein fluidbetätigtes, insbesondere druckbetätigtes Ventil erzeugt werden. Die Förderluftströmung kann nach Abgabe der Granulatportion in den Granulatabgabekanal selbigem zugeführt werden. Die mechanische Beschleunigung kann über ein bewegliches Kontaktglied erfolgen, welches mit der Granulatportion in Kontakt kommt und die Granulatportion beschleunigt. Das bewegliche Kontaktglied kann ein rotatorisch antreibbares Portionierelement der Portioniereinrichtung sein.

In einer anderen bevorzugten Ausführungsform des erfindungsgemäßen Verfahrens erfolgt das Auseinanderschieben des Erdreichs der landwirtschaftlichen Nutzfläche zum Erzeugen der Granulatablagefurche mittels zumindest einer Schneidscheibe des Furchenöffners, wobei die zumindest eine Schneidscheibe des Furchenöffners in Querrichtung benachbart zu dem Granulatabgabekanal angeordnet ist. Das rotatorisch antreibbare Portionierelement der Portioniereinrichtung und die zumindest eine Schneidscheibe des Furchenöffners weisen beispielsweise entgegengesetzte oder übereinstimmende Drehrichtungen auf. Das Auseinanderschieben des Erdreichs der landwirtschaftlichen Nutzfläche erfolgt vorzugsweise mittels einem zwei Schneidscheiben aufweisenden und als Doppel-Scheiben-Schar ausgebildeten Furchenöffner, wobei der Granulatabgabekanal zwischen den beiden Schneidscheiben des Doppel-Scheiben-Schars verläuft. Der Furchenöffner kann auch ein Einscheibenschar mit nebenlaufender Tiefenführungsrolle oder mit nebenlaufender Kufe sein. Der Furchenöffner kann auch ein Zinkenschar sein. Der Furchenöffner kann mit einem Furchenformer kombiniert werden, welcher in Fahrtrichtung zumindest teilweise hinter der Drehachse der zumindest einen Schneidscheibe angeordnet ist. Die zumindest eine Schneidscheibe kann vertikal ausgerichtet sein oder einen Neigungswinkel gegenüber einer Vertikalen aufweisen.

Es ist darüber hinaus ein erfindungsgemäßes Verfahren bevorzugt, bei welchem die Granulatportion den Granulatabgabekanal über eine Granulatabgabeöffnung verlässt, wobei die Abgabegeschwindigkeit, mit welcher die Granulatportion aus der Granulatabgabeöffnung austritt, vorzugsweise höher ist als die Fahrgeschwindigkeit der landwirtschaftlichen Ausbringmaschine. Vorzugsweise ist die Abgabegeschwindigkeit doppelt so hoch wie die Fahrgeschwindigkeit der landwirtschaftlichen Ausbringmaschine. Wenn die Abgabegeschwindigkeit im Verhältnis zur Fahrgeschwindigkeit hoch ist, wird die Granulatportion während des Auftreffens auf den Furchengrund lediglich geringfügig in die Länge gezogen, da zwischen dem Auftreffen des ersten und des letzten Granulatkorns der Granulatportion lediglich eine vergleichsweise kurze Strecke zurückgelegt wird. Das Verhältnis von Abgabegeschwindigkeit und Fahrgeschwindigkeit kann beispielsweise zwischen 2 und 5 betragen. Die Granulatportion wird von der Portioniereinrichtung beschleunigt und mit einer Fördergeschwindigkeit in den Granulatabgabekanal abgegeben. Die Fördergeschwindigkeit kann im Wesentlichen der Abgabegeschwindigkeit entsprechen. Alternativ kann die Fördergeschwindigkeit höher oder niedriger als die Abgabegeschwindigkeit sein.

Es ist darüber hinaus ein erfindungsgemäßes Verfahren bevorzugt, bei welchem sich eine quer zur Fahrtrichtung verlaufende Zentralachse durch den Mittelpunkt der zumindest einen Schneidscheibe des Furchenöffners erstreckt, wobei die Granulatabgabeöffnung des Granulatabgabekanals in Fahrtrichtung hinter der Zentralachse angeordnet ist. Somit ist gewährleistet, dass die Granulatportion den Deckungsbereich in Fahrtrichtung hinter der sich durch den Mittelpunkt der zumindest einen Schneidscheibe des Furchenöffners erstreckenden Zentralachse verlässt. Somit ist außerdem gewährleistet, dass die Granulatportion den Fangbereich in Fahrtrichtung hinter der sich durch den Mittelpunkt der zumindest einen Schneidscheibe des Furchenöffners erstreckenden Zentralachse passiert.

In einer anderen bevorzugten Ausführungsform des erfindungsgemäßen Verfahrens weist der Granulatabgabekanal eine Krümmung auf, wobei die Auslassöffnung der Portioniereinrichtung in Fahrtrichtung und/oder in Richtung der krümmungsinneren Wandung des Granulatabgabekanals gegenüber der Granulatabgabeöffnung des Granulatabgabekanals versetzt ist. Durch diesen Versatz wird die aus der Portioniereinrichtung austretende Granulatportion während einer Fahrbewegung der landwirtschaftlichen Ausbringmaschine gegen den Innenbereich der krümmungsäußeren Wandung des Granulatabgabekanals gedrückt, sodass das Risiko, dass sich ein Granulatkorn von der Granulatportion separiert, erheblich verringert wird.

Es ist außerdem ein erfindungsgemäßes Verfahren vorteilhaft, bei welchem die Portioniereinrichtung eine Auslassöffnung für erzeugte Granulatportionen aufweist, wobei die Auslassöffnung der Portioniereinrichtung in Fahrtrichtung vor der Granulatabgabeöffnung des Granulatabgabekanals angeordnet ist. Die Granulatportion wird in dem Granulatabgabekanal in Fahrtrichtung bewegt. Die Portioniereinrichtung kann in Fahrtrichtung beabstandet zu der Zentralachse des Furchenöffners angeordnet sein. Die Portioniereinrichtung kann in Fahrtrichtung vor oder hinter der Zentralachse des Furchenöffners angeordnet sein.

In einer Weiterbildung des erfindungsgemäßen Verfahrens findet sich ein Abschnitt des Furchenöffners senkrecht oberhalb der Granulatportion, wenn die Granulatportion den Furchengrund erreicht. Hierzu müssen die Abgabegeschwindigkeit der Granulatportion, die Relativposition von Granulatabgabeöffnung und Furchenöffner und die Dimensionierung des Furchenöffners entsprechend aufeinander abgestimmt sein. Wenn sich ein Abschnitt des Furchenöffners senkrecht oberhalb der Granulatportion befindet, wenn die Granulatportion den Furchengrund erreicht, fällt die Granulatablagefurche unmittelbar oberhalb der Granulatportion zusammen, sodass der Fangprozess optimiert und somit eine hohe Packungsdichte beim Ablegen der Granulatportion realisiert werden kann.

Es ist darüber hinaus ein erfindungsgemäßes Verfahren vorteilhaft, bei welchem das Auseinanderschieben des Erdreichs der landwirtschaftlichen Nutzfläche zum Öffnen der Granulatablagefurche mittels zwei winklig zueinander abgestellten Schneidscheiben des Furchenöffners erfolgt, wobei sich die Schneidscheiben vorzugsweise an einem Berührpunkt gegenseitig berühren und der Berührpunkt in Fahrtrichtung vor der Zentralachse des Furchenöffners liegt. Vorzugsweise liegt der Berührpunkt der beiden Schneidscheiben in Fahrtrichtung in dem vorderen, unteren Viertel der Schneidscheiben. Bei einer Seitenansicht auf die Schneidscheiben liegt der Berührpunkt ca. zwischen 7 und 8 Uhr. Hinter dem Berührpunkt gehen die Schneidscheiben auseinander. Die zwei Schneidscheiben weisen einen Anstellwinkel im Bereich von 5 Grad bis 20 Grad, beispielsweise 10 Grad, zueinander auf.

In einer anderen vorteilhaften Ausführungsform des erfindungsgemäßen Verfahrens wird die Granulatportion unter einem Abgabewinkel zu einer in Querrichtung verlaufenden Vertikalebene in Fahrtrichtung nach vorne abgegeben, wobei der Abgabewinkel in einem Bereich zwischen 1 Grad und 15 Grad liegt. Alternativ wird die Granulatportion unter einem Abgabewinkel zu einer in Querrichtung verlaufenden Vertikalachse in Fahrtrichtung nach hinten abgegeben, wobei der Abgabewinkel in einem Bereich zwischen 1 Grad und 45 Grad liegt. Bei einem gekoppelten Schar wird die Granulatportion mit einer nach vorne gerichteten Neigung von ca. 5 Grad abgegeben. Bei einem Blattfederschar wird die Granulatportion ungefähr senkrecht nach unten abgegeben, wenn sich das Blattfederschar im ausgefederten Zustand befindet. Bei einem Blattfederschar im eingefederten Zustand wird die Granulatportion beispielsweise leicht schräg nach hinten abgegeben. Der Auftreffwinkel der Granulatportion auf dem Furchengrund liegt vorzugsweise in einem Bereich zwischen 5 Grad und 30 Grad. Die Granulatportion verlässt den Granulatabgabekanal über eine Granulatabgabeöffnung des Granulatabgabekanals, wobei sich die Granulatabgabeöffnung seitlich neben oder innerhalb des Furchenöffners befindet. Die Granulatabgabeöffnung ist vorzugsweise seitlich auf Höhe der Schneidscheibe bzw. der Schneidscheiben oder in Fahrtrichtung vor oder hinter der Schneidscheibe bzw. den Schneidscheiben angeordnet. Die Granulatabgabeöffnung ist vorzugsweise unterhalb oder oberhalb der Drehachse der Schneidscheibe bzw. der Schneidscheiben angeordnet. Der Abstand zwischen dem Furchengrund und der Granulatabgabeöffnung beträgt zumindest die Hälfte des Radius der Schneidscheibe bzw. der Schneidscheiben, sodass Verstopfungen vermieden werden.

Es ist darüber hinaus ein erfindungsgemäßes Verfahren vorteilhaft, bei welchem das Erdreich der landwirtschaftlichen Nutzfläche mittels des Furchenöffners derart auseinandergeschoben wird, dass die Granulatablagefurche temporär einen W-förmigen, einen U-förmigen, einen V-förmigen, einen T-förmigen oder einen schwalbenschwanzförmigen Furchenquerschnitt aufweist. Die Form des Furchenquerschnitts kann entweder direkt durch den Furchenöffner erzeugt oder durch einen in Bezug auf den Furchenöffner nachlaufenden oder vorlaufenden Furchenformer realisiert werden.

In einer Weiterbildung des erfindungsgemäßen Verfahrens wird die in die Granulatablagefurche abgelegte Granulatportion mittels einer Fangeinrichtung der landwirtschaftlichen Ausbringmaschine in der Granulatablagefurche abgebremst. Falls die Furchenform nicht ausreichend selbstfangend gestaltet werden kann, ist zusätzlich eine Fangeinrichtung denkbar. Die Fangeinrichtung kann beispielsweise eine Fangrolle oder eine Fangkufe sein. Die Fangeinrichtung kann ferner ein oder mehrere Kettensegmente, Lappensegmente und/oder Lamellensegmente umfassen. Die Fangeinrichtung weist vorzugsweise einen Fangpunkt auf. Der Granulatabgabekanal bzw. die Granulatabgabeöffnung können so gestaltet sein, dass die Granulatportion in Richtung des Fangpunkts abgegeben wird. Der Fangpunkt kann innerhalb oder außerhalb der Granulatablagefurche liegen.

Die der Erfindung zugrundeliegende Aufgabe wird ferner durch eine Vorrichtung der eingangs genannten Art gelöst, wobei die erfindungsgemäße Vorrichtung dazu eingerichtet ist, die Granulatportion derart in die erzeugte Granulatablagefurche abzugeben, dass die Granulatportion vor Erreichen des Furchengrundes zunächst einen Deckungsbereich passiert, in welchem die Granulatportion sich zumindest einseitig in der Deckung des Furchenöffners befindet, welcher das Verschließen der Granulatablagefurche zumindest einseitig verhindert und anschließend einen Fangbereich passiert, in welchem sich die Granulatablagefurche wegen der Abwesenheit des Furchenöffners bereits verschließt.

In einer weiteren bevorzugten Ausführungsform ist die erfindungsgemäße Vorrichtung dazu eingerichtet, das Verfahren zum Ablegen von Granulatportionen nach einer der vorstehend beschriebenen Ausführungsformen auszuführen. Hinsichtlich der Vorteile und Modifikationen der erfindungsgemäßen Vorrichtung wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausbringaggregat einer erfindungsgemäßen Ausbringmaschine in einer Seitenansicht;
- Fig. 2: ein weiteres Ausbringaggregat einer erfindungsgemäßen Ausbringmaschine in einer Seitenansicht;
- Fig. 3: einen Furchenöffner samt Portioniereinrichtung und Granulatabgabeeinrichtung einer erfindungsgemäßen Ausbringmaschine in einer Seitenansicht;
- Fig. 4: die in der Fig. 3 abgebildeten Maschinenteile während der Abgabe von Granulatportionen in einer Schnittdarstellung;
- Fig. 5: eine Schnittdarstellung des in der Fig. 3 abgebildeten Furchenöffners;
- Fig. 6: eine weitere Schnittdarstellung des in der Fig. 3 abgebildeten Furchenöffners;
- Fig. 7: eine weitere Schnittdarstellung des in der Fig. 3 abgebildeten Furchenöffners;
- Fig. 8: eine weitere Schnittdarstellung des in der Fig. 3 abgebildeten Furchenöffners;
- Fig. 9: eine Darstellung der mit dem in der Fig. 3 abgebildeten Furchenöffner erzeugten Granulatablagefurche;
- Fig. 10: eine weitere Schnittdarstellung des in der Fig. 3 abgebildeten Furchenöffners;
- Fig. 11: einen mit einer erfindungsgemäßen Ausbringmaschine erzeugten Furchenquerschnitt einer Granulatablagefurche;
- Fig. 12: einen mit einer erfindungsgemäßen Ausbringmaschine erzeugten Furchenquerschnitt einer Granulatablagefurche;
- Fig. 13: einen mit einer erfindungsgemäßen Ausbringmaschine erzeugten Furchenquerschnitt einer Granulatablagefurche;
- Fig. 14: einen mit einer erfindungsgemäßen Ausbringmaschine erzeugten Furchenquerschnitt einer Granulatablagefurche;
- Fig. 15: eine Granulatabgabeeinrichtung einer erfindungsgemäßen Ausbringmaschine in einer schematischen Seitenansicht;
- Fig. 16: eine Granulatabgabeeinrichtung einer erfindungsgemäßen Ausbringmaschine in einer schematischen Seitenansicht;
- Fig. 17: eine Granulatabgabeeinrichtung einer erfindungsgemäßen Ausbringmaschine in einer schematischen Seitenansicht;
- Fig. 18: eine Granulatabgabeeinrichtung einer erfindungsgemäßen Ausbringmaschine in einer schematischen Seitenansicht;
- Fig. 19: eine Granulatabgabeeinrichtung einer erfindungsgemäßen Ausbringmaschine in einer schematischen Seitenansicht;
- Fig. 20: eine Granulatabgabeeinrichtung einer erfindungsgemäßen Ausbringmaschine in einer schematischen Seitenansicht;
- Fig. 21: eine Granulatabgabeeinrichtung einer erfindungsgemäßen Ausbringmaschine in einer schematischen Seitenansicht; und
- Fig. 22: eine Granulatabgabeeinrichtung einer erfindungsgemäßen Ausbringmaschine in einer schematischen Seitenansicht.

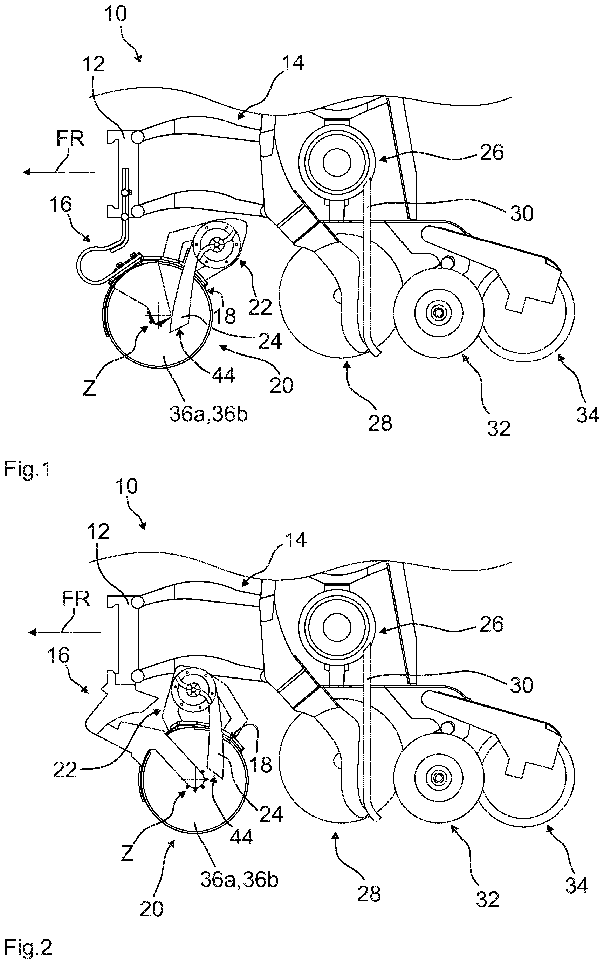

Die Fig. 1 zeigt ein Ausbringaggregat 10, mittels welchem Granulatportionen P, nämlich Düngerportionen, und vereinzelte Saatkörner auf eine landwirtschaftliche Nutzfläche N abgegeben werden können.

Das Ausbringaggregat 10 weist eine Halterung 12 auf, über welche das Ausbringaggregat 10 an einem Querbalken der landwirtschaftlichen Ausbringmaschine befestigt werden kann. Die Halterung 12 weist ein Parallelogrammgestänge 14 auf, über welches die an dem Parallelogrammgestänge 14 angeordneten Maschinenkomponenten eine Hubbewegung ausführen können.

Zum Erzeugen und Ablegen einer Granulatportion P weist das Ausbringaggregat 10 eine Portioniereinrichtung 22, eine Granulatabgabeeinrichtung 18 und einen Furchenöffner 20 auf, welche über einen gemeinsamen Befestigungsmechanismus 16 an der Halterung 12 befestigt sind. Der Befestigungsmechanismus 16 ist höhenverstellbar und erlaubt das gemeinsame Ein- und Ausfedern der Portioniereinrichtung 22, der Granulatabgabeeinrichtung 18 und des Furchenöffners 20. Der Furchenöffner 20 ist dazu eingerichtet, das Erdreich E der landwirtschaftlichen Nutzfläche N zum Erzeugen einer einen Furchengrund FG aufweisenden Granulatablagefurche AF auseinanderzuschieben. Die Granulatabgabeeinrichtung 18 ist dazu eingerichtet, die durch die Portioniereinrichtung 22 erzeugten Granulatportionen P in die erzeugte Granulatablagefurche AF abzugeben.

Die Granulatabgabeeinrichtung 18 weist einen Granulatabgabekanal 24 auf, welcher mit einer Auslassöffnung der Portioniereinrichtung 22 verbunden ist. Die Granulatportion P wird in dem Granulatabgabekanal 24 in Richtung der Granulatablagefurche AF geführt. Der Granulatabgabekanal 24 weist eine Kanalbewandung auf, wobei sich der Förderquerschnitt des Granulatabgabekanals 24 in Richtung der Granulatablagefurche AF verändert. Der Granulatabgabekanal 24 weist eine Krümmung auf, über welche Körner, welche sich von der erzeugten Granulatportion P entfernt haben, wieder eingesammelt bzw. wieder der Granulatportion P zugeführt werden.

Die Portioniereinrichtung 22 weist ein rotatorisch angetriebenes Portionierelement auf. Das Portionierelement sammelt beim Ausführen einer Drehbewegung in die Portioniereinrichtung 22 einströmende Granulatkörner ein und führt diese zu einer Granulatportion P zusammen.

Das Ausbringaggregat 10 weist ferner eine Kornvereinzelungseinrichtung 26 auf, mittels welcher Saatkörner vereinzelt werden. Die vereinzelten Saatkörner werden dann über ein Säschar 28 auf die landwirtschaftliche Nutzfläche N abgelegt. Nach der Vereinzelung der Saatkörner durch die Kornvereinzelungseinrichtung 26 werden die vereinzelten Saatkörner über einen Kornabgabekanal 30 in Richtung der Säfurche geführt, welche von dem Säschar 28 erzeugt wird. Hinter dem Säschar 28 befindet sich eine Fangrolle 32, welcheabgegebene Saatkörner am Boden der Säfurche andrückt. Hinter der Fangrolle 32 ist eine Andruckrolle 34 angeordnet, über welche das Erdreich E der landwirtschaftlichen Nutzfläche N nach Ablegen der Granulatportion P und der vereinzelten Saatkörner angedrückt wird.

Der Furchenformer 20 ist als Doppel-Scheiben-Schar ausgebildet und weist zwei Schneidscheiben 36a, 36b auf von denen der Übersichtlichkeit halber in den Figuren 1 und 2 nur eine der beiden dargestellt ist. Eine Zentralachse Z erstreckt sich durch die Mittelpunkte der Schneidscheiben 36a, 36b des Furchenöffners 20, wobei der Kornabgabekanal 30 und dessen Granulatabgabeöffnung 44 in Fahrtrichtung FR hinter der Zentralachse Z angeordnet sind. Die Auslassöffnung der Portioniereinrichtung 22 ist in Fahrtrichtung FR gegenüber der Granulatabgabeöffnung 44 des Granulatabgabekanals 24 versetzt positioniert. Die krümmungsinnere Wandung des Granulatabgabekanals 24 zeigt entgegen der Fahrtrichtung FR.

Bei dem in der Fig. 2 dargestellten Ausbringaggregat 10 ist der Befestigungsmechanismus 16 gelenkig ausgebildet. Die krümmungsinnere Wandung des Granulatabgabekanals 24 zeigt nun in Fahrtrichtung FR.

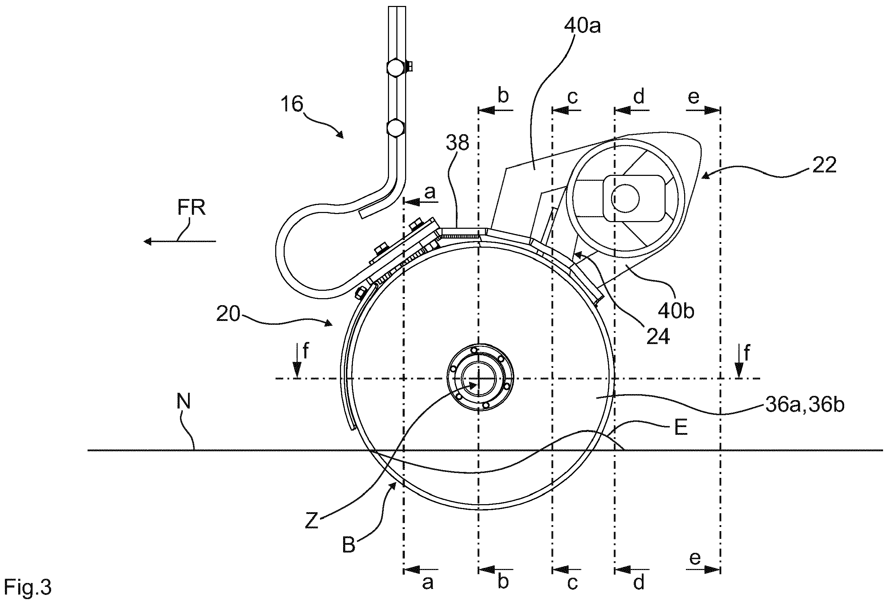

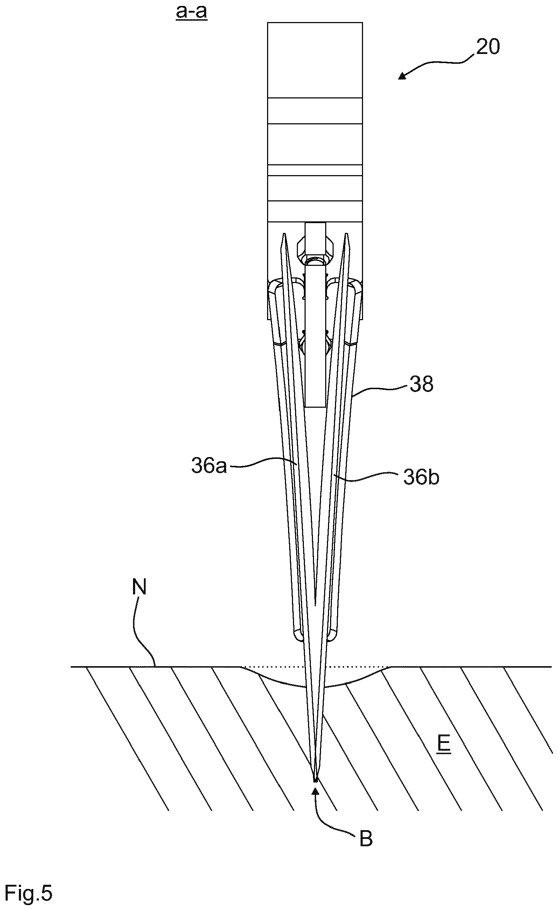

Die Fig. 3 zeigt, dass die Portioniereinrichtung 22 über Montageglieder 40a, 40b an einem Montagekörper 38 des Furchenöffners 20 befestigt ist. Der Montagekörper 38 ist ein Montageblech, welches über den Befestigungsmechanismus 16 an einer Halterung 12 eines Ausbringaggregats 10 befestigt werden kann. Die Portioniereinrichtung 22 ist in Bezug auf die Fahrtrichtung FR hinter der Zentralachse Z des Furchenöffners 20 angeordnet. Ferner zeigt die Fig. 3 Schnittlinien a-a bis f-f, deren dazugehörige Schnittansichten in den Fig. 5 bis 10 abgebildet sind.

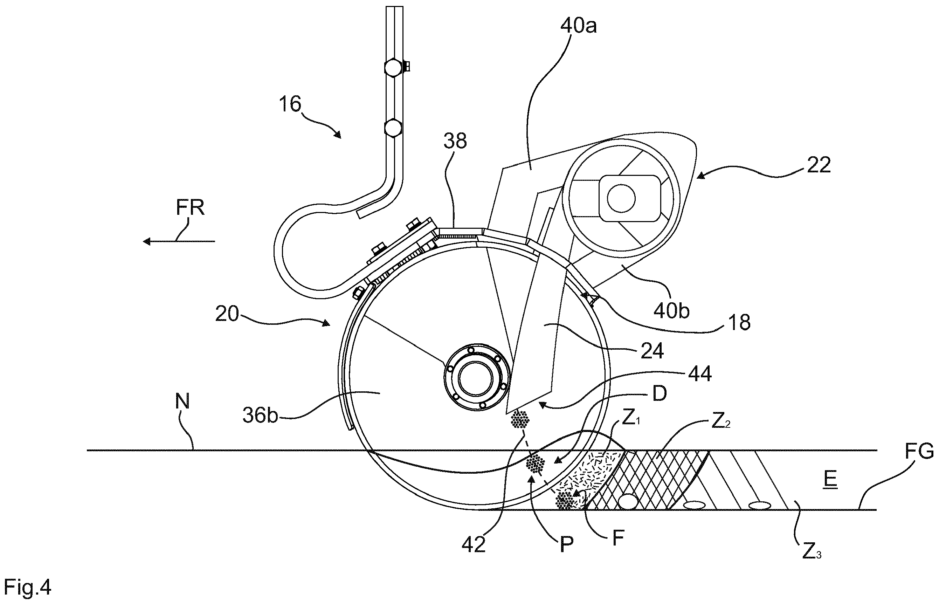

Die Fig. 4 zeigt einen Abgabepfad 42, entlang welchem sich die aus der Granulatabgabeöffnung 44 abgegebenen Granulatportionen P in Richtung des Furchengrundes FG der Granulatablagefurche AF bewegen.

Die Granulatportionen P werden durch die Granulatabgabeeinrichtung 18 derart in die durch den Furchenöffner 20 erzeugte Granulatablagefurche AF abgegeben, dass die Granulatportionen P vor Erreichen des Furchengrundes FG zunächst einen Deckungsbereich D passieren, in welchem sich die Granulatportionen P beidseitig in der Deckung des Furchenöffners 20 befinden, welcher das Verschließen der Granulatablagefurche AF im Deckungsbereich D beidseitig verhindert.

Das Erdreich E der landwirtschaftlichen Nutzfläche N wird beim Auseinanderschieben mittels des Furchenöffners 20 von den Schneidscheiben 36a, 36b des Furchenöffners 20 derart verdrängt, dass sich die erzeugte Granulatablagefurche AF bei Abwesenheit des Furchenöffners 20 verschließt. Die erzeugten Granulatportionen P passieren im Anschluss an den Deckungsbereich D einen Fangbereich F, in welchem sich die Granulatablagefurche AF wegen der Abwesenheit des Furchenöffners bereits verschließt. Die Granulatablagefurche AF ist also nur temporär für die Aufnahme der Granulatportionen P geöffnet. Noch während die Granulatportionen P die Granulatablagefurche AF passieren, fällt die Furchenbewandung zusammen und es kommt zu einem Furchenkollaps. In dem Fangbereich F, in welchem sich die Granulatablagefurche AF wegen der Abwesenheit des Furchenöffners 20 verschließt, welchen die Granulatportionen P gefangen. Bei der Granulatablagefurche AF handelt es sich also um eine selbstfangende Furche.

Unmittelbar hinter den Schneidscheiben 36a, 36b des Furchenöffners 20 befindet sich eine Rückflusszone Z₁, in welcher das zuvor durch den Furchenöffner 20 verdrängte Erdreich E zurück in die Granulatablagefurche AF fließt. In der Rückflusszone Z₁ erfolgt das eigentliche Fangen der Granulatportionen P. Die Granulatportionen P werden in der Rückflusszone Z₁ noch vor Erreichen des Furchengrundes FG von oben mit Erdreich E bedeckt. In der sich an die Rückflusszone Z₁ anschließende Furchenschlusszone Z₂ haben die Granulatportionen P bereits den Furchengrund FG erreicht, wobei in diesem Bereich die Erdbewegungen zum Erliegen kommen. In der sich daran anschließenden geschlossenen Zone Z₃ erfolgen keine Erdbewegungen mehr und die Granulatportionen P sind in das Erdreich E eingebettet.

Die Abgabegeschwindigkeit, mit welcher die Granulatportionen P aus der Granulatabgabeöffnung 44 des Granulatabgabekanals 24 austreten, ist höher als die Fahrgeschwindigkeit der landwirtschaftlichen Ausbringmaschine. Wenn die Abgabegeschwindigkeit im Verhältnis zur Fahrgeschwindigkeit hoch ist, wird die Granulatportion P während des Auftreffens auf den Furchengrund FG lediglich geringfügig in die Länge gezogen, da zwischen dem Auftreffen des ersten und des letzten Granulatkorns der jeweiligen Granulatportionen P lediglich eine kurze Strecke zurückgelegt wird.

Die Fig. 5 zeigt, dass die Schneidscheiben 36a, 36b des Furchenöffners 20 geneigt zueinander angeordnet sind. Die winklig zueinander angestellten Schneidscheiben 36a, 36b des Furchenöffners 20 schieben das Erdreich E der landwirtschaftlichen Nutzfläche N zum Öffnen der Granulatablagefurche AF auseinander. Die Schneidscheiben 36a, 36b berühren sich gegenseitig in einem Berührpunkt B. Der Berührpunkt B liegt in Fahrtrichtung FR vor der Zentralachse Z des Furchenöffners 20. Der Berührpunkt B der beiden Schneidscheiben 36a, 36b liegt in Fahrtrichtung in einem vorderen unteren Viertel der Schneidscheiben 36a, 36b. in Zusammenschau mit der Seitenansicht der Fig. 3 ergibt sich, dass der Berührpunkt B auf ca. 7 bis 8 Uhr liegt. Hinter dem Berührpunkt B gehen die Schneidscheiben 36a, 36b auseinander.

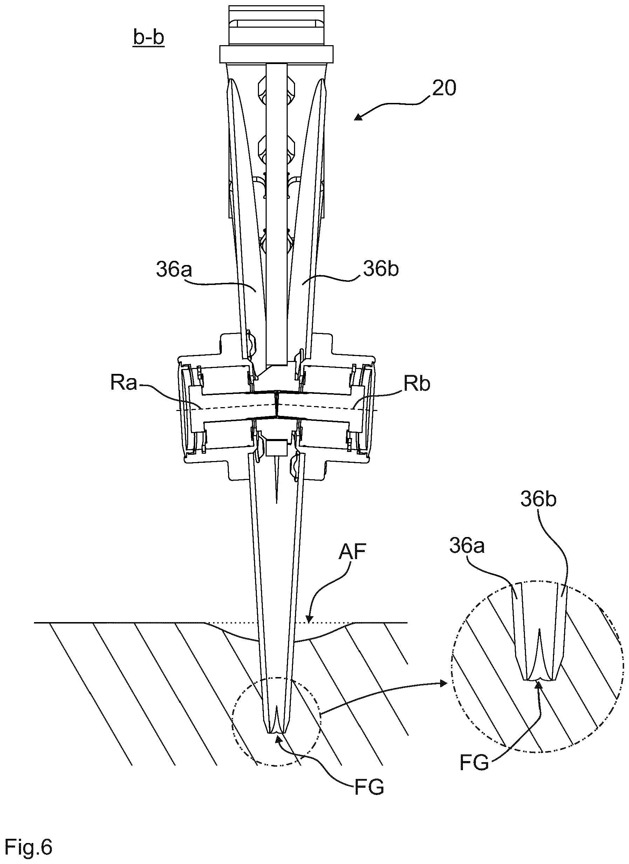

Die Fig. 6 zeigt, dass die Schneidscheiben 36a, 36b während der Furchenerzeugung Drehbewegungen um Drehachsen Ra, Rb ausführen. Die Drehachsen Ra, Rb verlaufen durch die Mittelpunkte der Schneidscheiben 36a, 36b.

Durch das Auseinanderlaufen der Schneidscheiben 36a, 36b hinter dem Berührpunkt B ergibt sich auf Höhe des in der Fig. 6 dargestellten Schnitts eine Granulatablagefurche AF, welche einen W-förmigen Furchenquerschnitt aufweist.

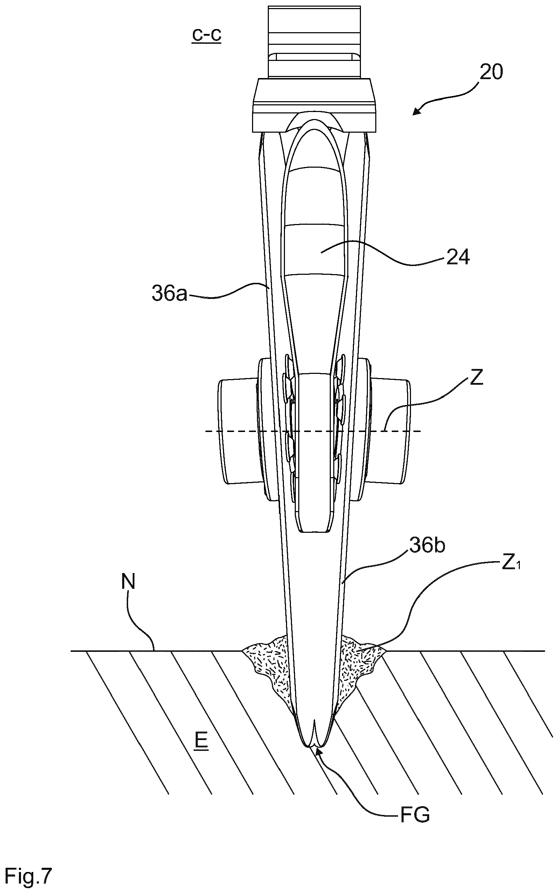

Der W-förmige Furchenquerschnitt wird auch in der Rückflusszone Z₁ beibehalten, wie in der Fig. 7 dargestellt. Die Fig. 7 zeigt außerdem, dass der Granulatabgabekanal 24 zwischen den beiden Schneidscheiben 36a, 36b des Furchenöffners 20 angeordnet ist.

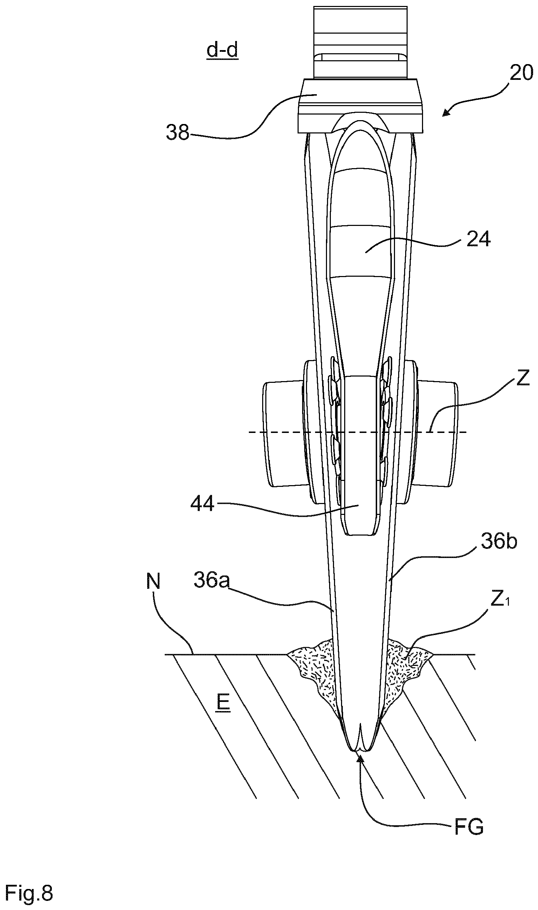

Die Fig. 8 zeigt, dass das Erdreich E der landwirtschaftlichen Nutzfläche N beim Auseinanderschieben mittels des Furchenöffners 20 von dem Furchenöffner 20 derart verdrängt wird, dass die aus der Erdverdrängung resultierende Rückströmneigung des Erdreichs E bei Abwesenheit des Furchenöffners 20 direkt zu einem Furchenverschluss führen würde.

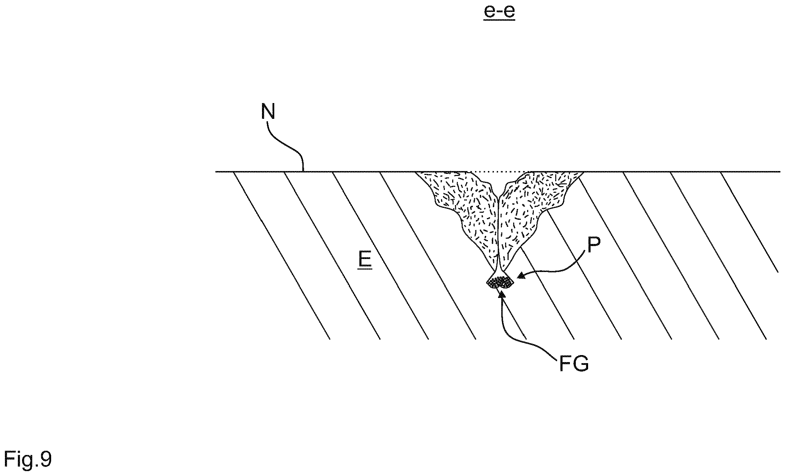

Wie in der Fig. 9 dargestellt, wird die Granulatportion P unmittelbar nach der Abgabe von oben mit Erdreich E beaufschlagt, sodass das Erdreich E der zusammenfallenden Granulatablagefurche AF im Fangbereich F die kinetische Energie aus den Körnern der Granulatportionen P aufnimmt, in dem die Körner direkt nach dem Verlassen des Deckungsbereichs D eingeklemmt und derart vom Erdreich E begrenzt werden, dass ein Verrollen in der Granulatablagefurche AF und ein Herausspringen aus der Granulatablagefurche AF nicht möglich ist.

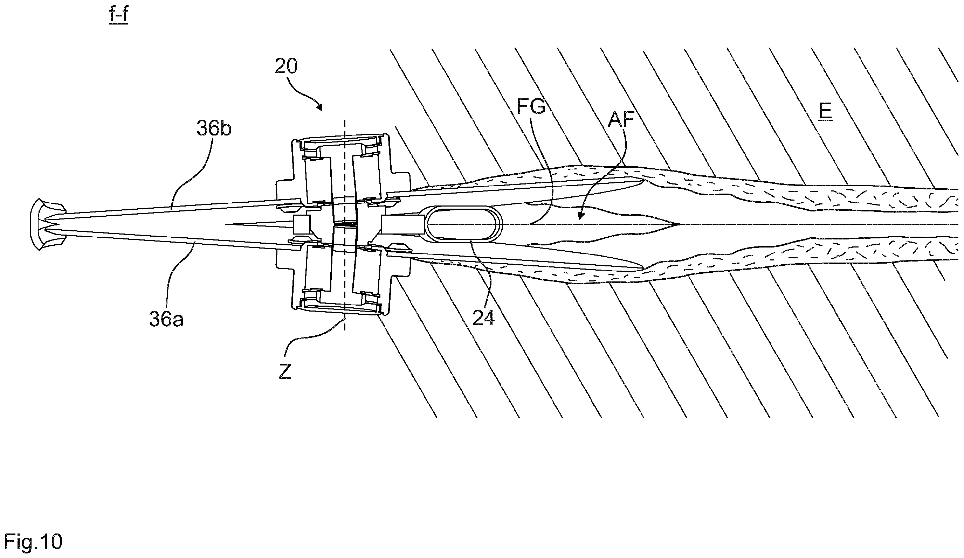

Die Fig. 10 zeigt, dass sich der Abstand zwischen den Schneidscheiben 36a, 36b von einem vorderen Schneidscheibenbereich bis zu einem hinteren Schneidscheibenbereich vergrößert, sodass hinter der Zentralachse Z der Granulatabgabekanal 24 der Granulatabgabeeinrichtung 18 positioniert sein kann.

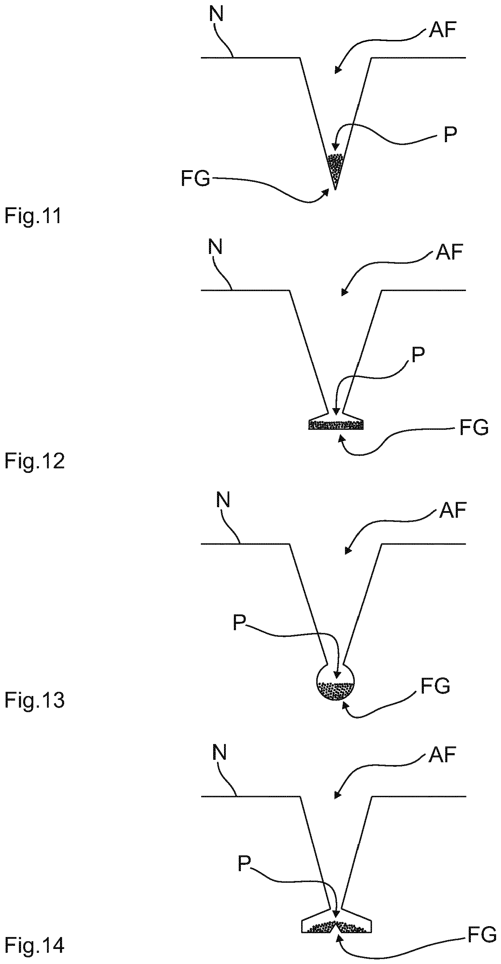

Die Fig. 11 bis 14 zeigen unterschiedliche Furchenquerschnitte, welche mittels eines Furchenöffners und ggf. eines Furchenformers 54 eines Ausbringaggregats 10 erzeugt werden können. In der Fig. 11 ist ein V-förmiger bzw. keilförmiger Furchenquerschnitt dargestellt. Die Fig. 12 zeigt einen Furchenquerschnitt, bei welcher am Furchengrund FG eine sich beidseitig nach außen erstreckende Aufnahmetasche vorhanden ist. Durch die Aufnahmetasche wird eine Art T-Nut-Furche erzeugt. Die Fig. 13 zeigt einen Furchenquerschnitt, bei welcher die Aufnahmefurche AF am Furchengrund FG einen im Wesentlichen kreisrunden Aufnahmekanal aufweist. Die in der Fig. 14 dargestellte Granulatablagefurche AF ist in einem unteren Bereich schwalbenschwanzförmig ausgebildet.

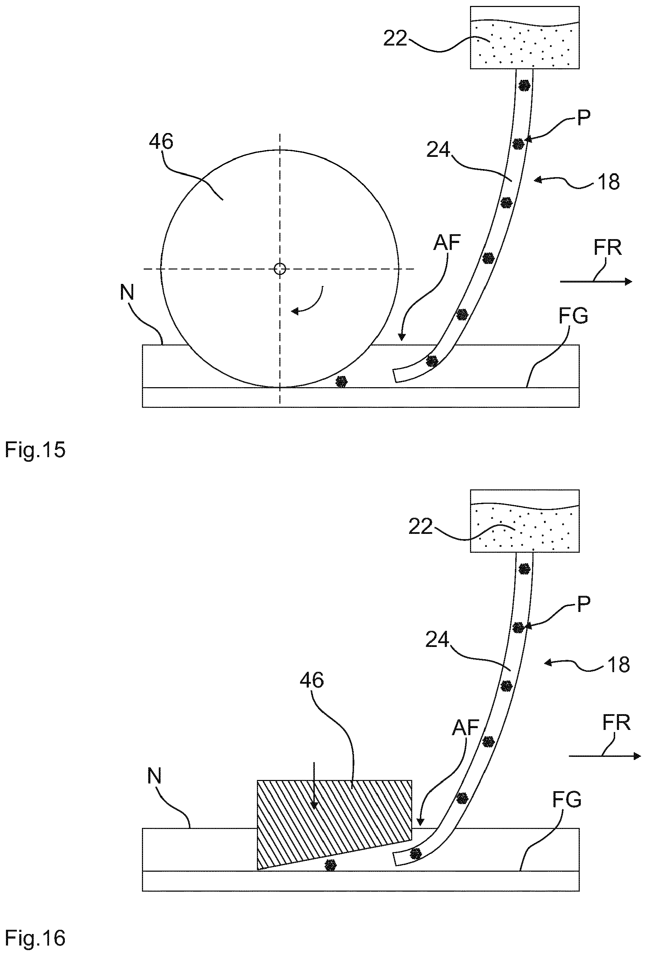

Wie in den Fig. 15 bis 18 dargestellt, können die in die Granulatablagefurche AF abgelegten Granulatportionen P auch mittels einer Fangeinrichtung 46 der landwirtschaftlichen Ausbringmaschine in der Granulatablagefurche AF abgebremst werden. Entsprechende Fangeinrichtungen 46 sind insbesondere dann vorteilhaft, wenn die Furchenform nicht ausreichend selbstfangend gestaltet werden kann.

In der Fig. 15 ist die Fangeinrichtung 46 eine Fangrolle, welche in Fahrtrichtung FR hinter der Granulatabgabeeinrichtung 18 angeordnet ist. Die über den Granulatabgabekanal 24 abgegebenen Granulatportionen P werden durch die Fangrolle 46 gefangen und auf den Furchengrund FG der Granulatablagefurche AF gedrückt.

Bei dem in der Fig. 16 dargestellten Ausführungsbeispiel ist die Fangeinrichtung 46 als Fangkufe ausgebildet. Die Fangkufe sorgt ebenfalls für ein Abfangen der erzeugten Granulatportionen P und ein Andrücken der abgefangenen Granulatportionen P auf dem Furchengrund FG der Granulatablagefurche AF.

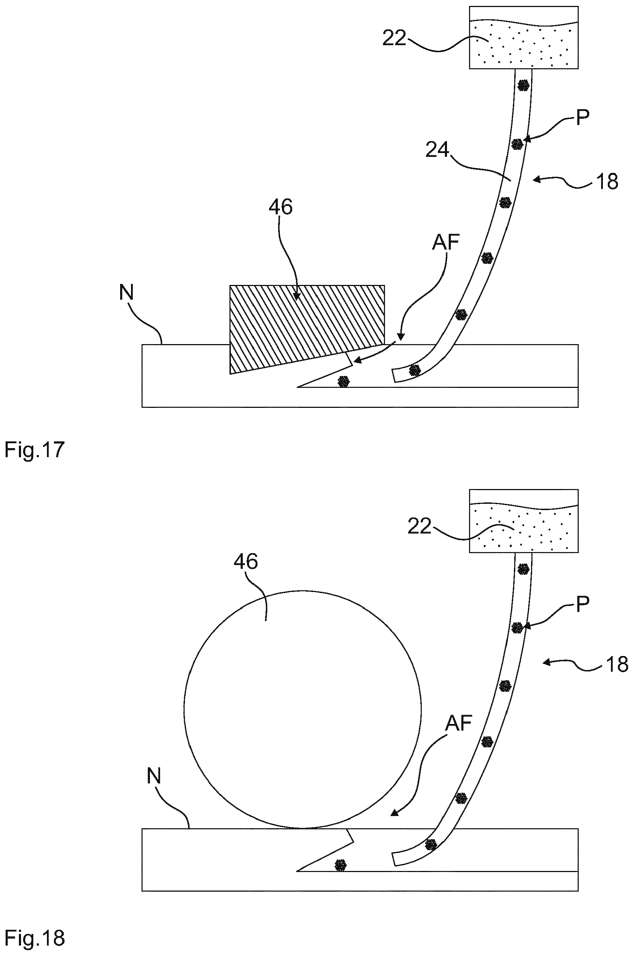

Bei den in den Fig. 17 und 18 dargestellten Ausführungsbeispielen dient der Boden der landwirtschaftlichen Nutzfläche N als Fangelement. In der Fig. 17 ist die Fangeinrichtung 46 ein Zustreicher, welcher nicht direkt mit den Granulatportionen P in Kontakt kommt, sondern eine Erdbewegung verursacht, über welche die Granulatportionen P gefangen werden. In der Fig. 18 ist ein Ausführungsbeispiel dargestellt, in welcher anstatt eines Zustreichers eine Rolle eingesetzt wird.

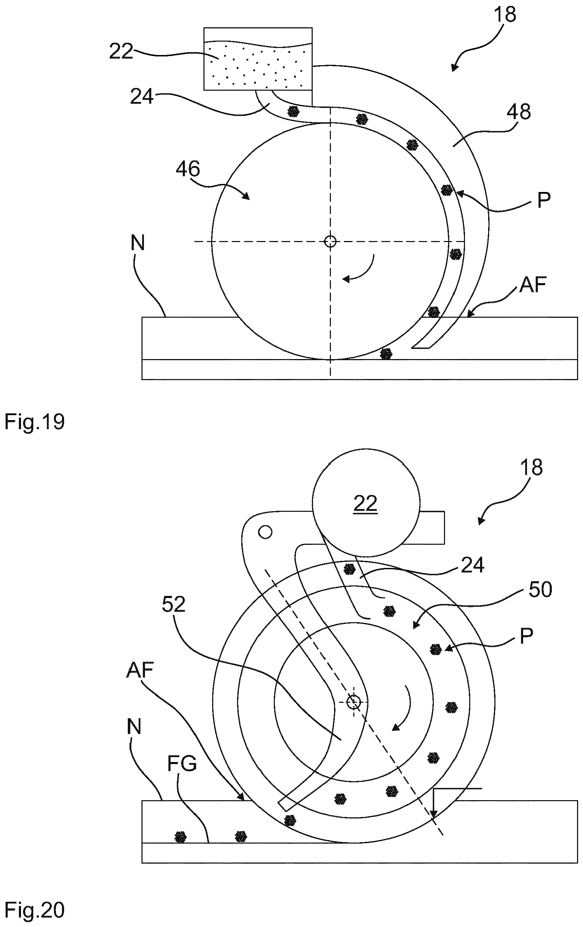

Bei dem in der Fig. 19 dargestellten Ausführungsbeispiel ist die Fangeinrichtung 46 erneut eine Fangrolle, wobei der Ablageprozess durch einen Führungskörper 48 unterstützt wird. Die Granulatportionen P werden in einem Spalt zwischen der Oberfläche der Fangrolle 46 und einer Führungsfläche des Führungskörpers 48 in Richtung der Granulatablagefurche AF geführt.

Die Fig. 20 zeigt eine Granulatabgabeeinrichtung 18, bei welcher die Granulatportionen P in eine Trägerbürste 50 abgegeben werden, wobei die Trägerbürste 50 eine Rotationsbewegung ausführt, sodass die sich in der Trägerbürste 50 befindenden Granulatportionen P von einem Abstreifer 52 im Nahbereich der Granulatablagefurche AF derart abgestriffen werden können, dass die Granulatportionen P die Trägerbürste 50 verlassen und auf den Furchengrund FG der Granulatablagefurche AF abgelegt werden.

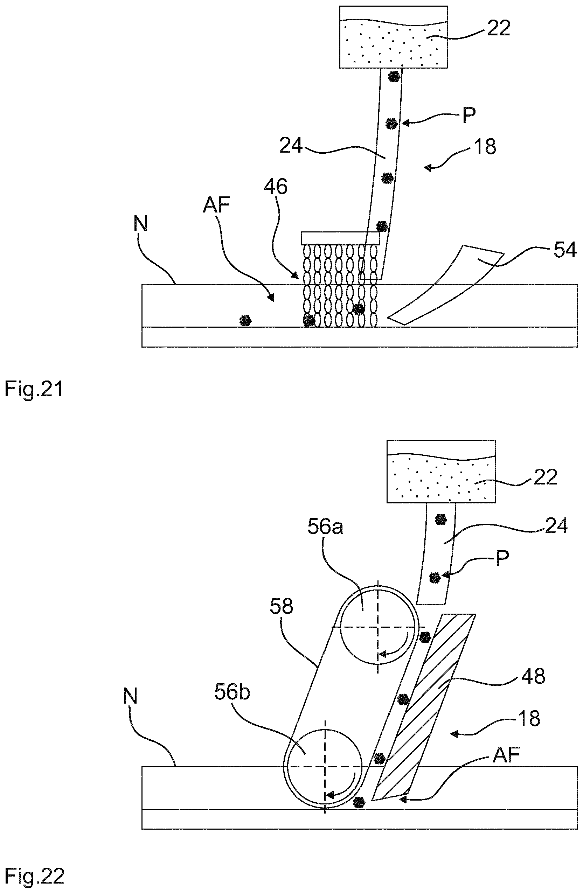

Wie in der Fig. 21 dargestellt, kann als Fangeinrichtung 46 auch eine Ketten-, Lappen- oder Lamellenanordnung eingesetzt werden. In Fahrtrichtung vor der Fangeinrichtung 46 kann ein Furchenformer 54 angeordnet sein, welcher die Furchenform auf einen nachfolgenden Fangprozess anpasst.

In der Fig. 22 ist eine Führungseinheit dargestellt, mittels welcher erzeugte Granulatportionen P in eine Granulatablagefurche AF transportiert werden können. Die Granulatportionen P werden dabei zwischen einer Führungsfläche eines Führungskörpers 48 und einem Riemen 58 eingeklemmt. Der Riemen 58 läuft um Umlenkrollen 56a, 56b um, über welche der Riemen 58 auch angetrieben wird. Durch die Riemenbewegung werden die zwischen dem Führungskörper 48 und dem Riemen 58 eingeklemmten Granulatportionen P in Richtung der Granulatablagefurche AF gefördert.

### Bezugszeichenliste

- 10: Ausbringaggregat
- 12: Halterung
- 14: Parallelogrammgestänge
- 16: Befestigungsmechanismus
- 18: Granulatabgabeeinrichtung
- 20: Furchenöffner
- 22: Portioniereinrichtung
- 24: Granulatabgabekanal
- 26: Kornvereinzelungseinrichtung
- 28: Säschar
- 30: Kornabgabekanal
- 32: Fangrolle
- 34: Andruckrolle
- 36a, 36b: Schneidscheiben
- 38: Montagekörper
- 40a, 40b: Montageglieder
- 42: Abgabepfad
- 44: Granulatabgabeöffnung
- 46: Fangeinrichtung
- 48: Führungskörper
- 50: Trägerbürste
- 52: Abstreifer
- 54: Furchenformer
- 56a, 56b: Umlenkrollen
- 58: Riemen
- AF: Granulatablagefurche
- B: Berührpunkt
- D: Deckungsbereich
- E: Erdreich
- F: Fangbereich
- FG: Furchengrund
- FR: Fahrtrichtung
- N: Nutzfläche
- P: Granulatportionen
- Ra, Rb: Drehachsen
- Z: Zentralachse
- Z₁: Rückflusszone
- Z₂: Furchenschlusszone
- Z₃: geschlossene Zone

## Patentansprüche

1. Verfahren zum Ablegen von Granulatportionen (P), insbesondere Düngerportionen, auf eine landwirtschaftliche Nutzfläche (N) mittels einer landwirtschaftlichen Ausbringmaschine, mit den Schritten:
- Auseinanderschieben des Erdreichs (E) der landwirtschaftlichen Nutzfläche (N) mittels eines Furchenöffners (20) der landwirtschaftlichen Ausbringmaschine zum Erzeugen einer einen Furchengrund (FG) aufweisenden Granulatablagefurche (AF); und
- Abgeben einer Granulatportion (P) in die erzeugte Granulatablagefurche (AF) mittels einer Granulatabgabeeinrichtung (18) der landwirtschaftlichen Ausbringmaschine;
wobei das Erdreich (E) der landwirtschaftlichen Nutzfläche (N) beim Auseinanderschieben mittels des Furchenöffners (20) von dem Furchenöffner (20) derart verdrängt wird, dass sich die erzeugte Granulatablagefurche (AF) bei Abwesenheit des Furchenöffners (20) verschließt;
**dadurch gekennzeichnet, dass** die Granulatportion (P) derart in die erzeugte Granulatablagefurche (AF) abgegeben wird, dass die Granulatportion (P) vor Erreichen des Furchengrundes (FG) zunächst einen Deckungsbereich (D) passiert, in welchem sich die Granulatportion (P) zumindest einseitig in der Deckung des Furchenöffners (20) befindet, welcher das Verschließen der Granulatablagefurche (AF) zumindest einseitig verhindert, und anschließend einen Fangbereich (F) passiert, in welchem sich die Granulatablagefurche (AF) wegen der Abwesenheit des Furchenöffners (20) bereits verschließt.

2. Verfahren nach Anspruch 1,
**dadurch gekennzeichnet, dass** die Granulatportion (P) in einer Portioniereinrichtung (22) der landwirtschaftlichen Ausbringmaschine erzeugt und in einen mit der Portioniereinrichtung (22) verbundenen Granulatabgabekanal (24) der Granulatabgabeeinrichtung (18) in Richtung der Granulatablagefurche (AF) geführt wird.

3. Verfahren nach Anspruch 2,
**dadurch gekennzeichnet, dass** die Granulatportion (P) in der Portioniereinrichtung (22) und/oder dem Granulatabgabekanal (24) pneumatisch und/oder mechanisch beschleunigt wird.

4. Verfahren nach Anspruch 2 oder 3,
**dadurch gekennzeichnet, dass** das Auseinanderschieben des Erdreichs (E) der landwirtschaftlichen Nutzfläche (N) zum Erzeugen der Granulatablagefurche (AF) mittels zumindest einer Schneidscheibe (36a, 36b) des Furchenöffners (20) erfolgt, wobei die zumindest eine Schneidscheibe (36a, 36b) des Furchenöffners (20) in Querrichtung benachbart zu dem Granulatabgabekanal (24) angeordnet ist.

5. Verfahren nach einem der Ansprüche 2 bis 4,
**dadurch gekennzeichnet, dass** die Granulatportion (P) den Granulatabgabekanal (24) über eine Granulatabgabeöffnung (44) verlässt, wobei die Abgabegeschwindigkeit, mit welcher die Granulatportion (P) aus der Granulatabgabeöffnung (44) austritt, vorzugsweise höher ist als die Fahrgeschwindigkeit der landwirtschaftlichen Ausbringmaschine.

6. Verfahren nach Anspruch 4 und 5,
**dadurch gekennzeichnet, dass** sich eine quer zur Fahrrichtung verlaufende Zentralachse (Z) durch den Mittelpunkt der zumindest einen Schneidscheibe (36a, 36b) des Furchenöffners (20) erstreckt, wobei die Granulatabgabeöffnung (44) des Granulatabgabekanals (24) in Fahrtrichtung (FR) hinter der Zentralachse (Z) angeordnet ist.

7. Verfahren nach einem der Ansprüche 2 bis 6,
**dadurch gekennzeichnet, dass** der Granulatabgabekanal (24) eine Krümmung aufweist, wobei die Auslassöffnung der Portioniereinrichtung (22) in Fahrtrichtung (FR) und/oder in Richtung der krümmungsinneren Wandung des Granulatabgabekanals (24) gegenüber der Granulatabgabeöffnung (44) des Granulatabgabekanals (24) versetzt ist.

8. Verfahren nach einem der Ansprüche 2 bis 7,
**dadurch gekennzeichnet, dass** die Portioniereinrichtung (22) eine Auslassöffnung für erzeugte Granulatportionen (P) aufweist, wobei die Auslassöffnung der Portioniereinrichtung (22) in Fahrrichtung vor der Granulatabgabeöffnung (44) des Granulatabgabekanal (24) angeordnet ist.

9. Verfahren nach einem der vorstehenden Ansprüche,
**dadurch gekennzeichnet, dass** sich ein Abschnitt des Furchenöffners (20) senkrecht oberhalb der Granulatportion (P) befindet, wenn die Granulatportion (P) den Furchengrund (FG) erreicht.

10. Verfahren nach einem der vorstehenden Ansprüche,
**dadurch gekennzeichnet, dass** das Auseinanderschieben des Erdreichs (E) der landwirtschaftlichen Nutzfläche (N) zum Öffnen der Granulatablagefurche (AF) mittels zwei winklig zueinander angestellten Schneidscheiben (36a, 36b) des Furchenöffners (20) erfolgt, wobei sich die Schneidscheiben (36a, 36b) vorzugsweise an einem Berührpunkt (B) gegenseitig berühren und der Berührpunkt (B) in Fahrtrichtung (FR) vor der Zentralachse (Z) des Furchenöffners (20) liegt.

11. Verfahren nach einem der vorstehenden Ansprüche,
**dadurch gekennzeichnet, dass**
- die Granulatportion (P) unter einem Abgabewinkel zu einer in Querrichtung verlaufenden Vertikalebene in Fahrtrichtung (FR) nach vorne abgeben wird, wobei der Abgabewinkel in einem Bereich zwischen 1 und 15 Grad liegt; oder
- die Granulatportion (P) unter einem Abgabewinkel zu einer in Querrichtung verlaufenden Vertikalebene in Fahrtrichtung (FR) nach hinten abgeben wird, wobei der Abgabewinkel in einem Bereich zwischen 1 und 45 Grad liegt.

12. Verfahren nach einem der vorstehenden Ansprüche,
**dadurch gekennzeichnet, dass** das Erdreich (E) der landwirtschaftlichen Nutzfläche (N) mittels des Furchenöffners (20) derart auseinandergeschoben wird, dass die Granulatablagefurche (AF) temporär einen W-förmigen, einen U-förmigen, einen V-förmigen, einen T-förmigen oder einen schwalbenschwanzförmigen Furchenquerschnitt aufweist.

13. Verfahren nach einem der vorstehenden Ansprüche,
**dadurch gekennzeichnet, dass** die in die Granulatablagefurche (AF) abgelegte Granulatportion (P) mittels einer Fangeinrichtung (46) der landwirtschaftlichen Ausbringmaschine in der Granulatablagefurche (AF) abgebremst wird.

14. Vorrichtung zum Ablegen von Granulatportionen (P), insbesondere Düngerportionen, auf eine landwirtschaftliche Nutzfläche (N), mit
- einem Furchenöffner (20), welcher dazu eingerichtet ist, das Erdreich (E) der landwirtschaftlichen Nutzfläche (N) zum Erzeugen einer einen Furchengrund (FG) aufweisenden Granulatablagefurche (AF) auseinanderzuschieben; und
- einer Granulatabgabeeinrichtung (18), welche dazu eingerichtet ist, eine Granulatportion (P) in die erzeugte Granulatablagefurche (AF) abzugeben;
wobei der Furchenöffner (20) dazu eingerichtet ist, das Erdreich (E) der landwirtschaftlichen Nutzfläche (N) beim Auseinanderschieben derart zu verdrängen, dass sich die geöffnete Granulatablagefurche (AF) bei Abwesenheit des Furchenöffners (20) verschließt;
**dadurch gekennzeichnet, dass** die Vorrichtung dazu eingerichtet ist, die Granulatportion (P) derart in die erzeugte Granulatablagefurche (AF) abzugeben, dass die Granulatportion (P) vor Erreichen des Furchengrundes (FG) zunächst einen Deckungsbereich (D) passiert, in welchem sich die Granulatportion (P) zumindest einseitig in der Deckung des Furchenöffners (20) befindet, welcher das Verschließen der Granulatablagefurche (AF) zumindest einseitig verhindert, und anschließend einen Fangbereich (F) passiert, in welchem sich die Granulatablagefurche (AF) wegen der Abwesenheit des Furchenöffners (20) bereits verschließt.

15. Vorrichtung nach Anspruch 14,
**dadurch gekennzeichnet, dass** die Vorrichtung dazu eingerichtet ist, das Verfahren zum Ablegen von Granulatportionen (P) nach einem der Ansprüche 1 bis 13 auszuführen.
